# DEMANDE DE BREVET EUROPEEN

(11) **EP 1 862 952 A1**
(43) Date de publication de la demande: **05.12.2007**
(21) Numéro de dépôt: 06300536.7
(22) Date de dépôt: 30.05.2006
(51) Int. Cl.: G06K 19/073

(54) **Dispositif électronique sécurisé**

(71) Demandeur: Axalto SA, 92197 Meudon Cedex (FR)
(72) Inventeur: Gien, Christophe, 92190 Meudon (FR); Gentils, Thomas, 92190 Meudon (FR)
(74) Mandataire: Cour, Pierre

(57) **Abrégé**

Un circuit électronique 1 comportant un circuit de traitement 11 de données sécurisées, est apte à échanger des informations avec l'extérieur. Le circuit de traitement 11 étant apte à garder des données secrètes, et apte à détecter une attaque visant à utiliser ou à extraire les données secrètes. Un circuit de temporisation autonome 12 est relié au circuit de traitement 11. Le circuit de temporisation 12 est déclenché lors de la détection d'une attaque et bloque le fonctionnement du circuit de traitement 11 après déclenchement pendant une durée prédéterminée. Le circuit étant rendu indisponible après une attaque détectée, il n'est plus possible de faire une nouvelle attaque avant un certain temps. Le blocage temporaire est intrinsèque au circuit et il n'est pas possible de le débloquer à l'aide d'une commande logicielle. Bien qu'il soit temporaire, ce blocage peut faire croire à un blocage définitif.

## Description

L'invention se rapporte à un dispositif électronique sécurisé. Plus particulièrement, l'invention est dans le domaine des circuits électroniques comportant des données confidentielles, tel que les circuits de cartes à puce.

Les cartes à puce sont des objets couramment utilisés à l'heure actuelle pour sécuriser des informations. Classiquement, la sécurisation des informations consiste à crypter où à signer des données à l'aide d'informations confidentielles. L'utilisation d'une carte à puce ou d'un circuit électronique dédié permet de conserver les données confidentielles à l'intérieur du circuit et à les utiliser uniquement dans le circuit. Eventuellement, des codes d'accès peuvent être utilisés conjointement aux données confidentielles pour que la carte puisse identifier que l'utilisateur est autorisé à utiliser la carte. La sécurisation vise également à rendre inaccessible les informations confidentielles.

Cette sécurisation intervient à différents niveaux. La puce est rendue inaccessible, par exemple à l'aide d'un enrobage. L'enrobage peut inclure des éléments destinés à détruire la puce si l'on tente de le retirer pour espionner le circuit. Les circuits électroniques peuvent comprendre des mises en cours-circuit ou des systèmes de blocage de certains éléments en cas d'attaque détectée de manière physique ou logicielle. Les données sensibles peuvent être cryptées ou mélangées dans la mémoire de la carte.

Parmi les différents moyens mis en oeuvre la détection d'attaque logicielle peut se révéler particulièrement efficace. La détection logicielle sert à repérer un usage non autorisé de la carte ou une tentative d'accès à des informations sécurisées. Un problème rencontré avec la détection logicielle est la fausse détection. Une attaque peut être détectée alors qu'il ne s'agit pas d'une attaque mais d'une simple erreur d'utilisation par l'utilisateur ou une mauvaise configuration d'un terminal. A cet effet, le déclenchement d'action irréversible sur la carte peut être néfaste pour l'utilisateur. A l'opposé, une carte bloquée de manière facilement réversible peut se faire débloquer de manière frauduleuse.

Trouver de nouvelles techniques pour lutter contre les attaques et améliorer la sécurité des circuits électroniques est un problème technique récurent que se pose l'homme du métier.

L'invention propose une solution pour rendre indisponible un circuit électronique, notamment un circuit de carte à puce, de manière temporaire. Le circuit étant rendu indisponible après une attaque détectée, il n'est plus possible de faire une nouvelle attaque avant un certain temps. Le blocage temporaire est intrinsèque au circuit et il n'est pas possible de le débloquer à l'aide d'une commande logicielle. Bien qu'il soit temporaire, ce blocage peut faire croire à un blocage définitif. En outre, le blocage temporaire ralenti de manière conséquente la succession d'attaques nécessaires pour pirater le circuit. En cas de blocage lié à une opération accidentelle, le circuit redevient fonctionnel lorsque la temporisation est écoulée. Il n'est alors plus nécessaire de changer le circuit ou la carte. Il est possible d'augmenter la sensibilité de détection d'attaque sans risquer de rendre le circuit inutilisable en cas de fausse détection.

Selon un premier aspect, l'invention est un circuit électronique comportant au moins une interface de communication, un circuit de traitement et un circuit de temporisation autonome. Le circuit de traitement mémorise et traite des données sécurisées. Ledit circuit de traitement est relié à l'interface de communication pour échanger des informations avec l'extérieur. Le circuit de traitement est apte à garder des données secrètes, et apte à détecter une attaque visant à utiliser ou à extraire des données secrètes. Le circuit de temporisation autonome est relié au circuit de traitement. Le circuit de temporisation est déclenché lors de la détection d'une attaque et bloque le fonctionnement du circuit de traitement après déclenchement pendant une durée prédéterminée.

Selon un deuxième aspect, l'invention est une carte à puce incluant au moins un circuit électronique qui comporte au moins une interface de communication, un circuit de traitement et un circuit de temporisation autonome. Le circuit de traitement mémorise et traite des données sécurisées. Ledit circuit de traitement est relié à l'interface de communication pour échanger des informations avec l'extérieur. Le circuit de traitement est apte à garder des données secrètes, et apte à détecter une attaque visant à utiliser ou à extraire des données secrètes. Le circuit de temporisation autonome est relié au circuit de traitement. Le circuit de temporisation est déclenché lors de la détection d'une attaque et bloque le fonctionnement du circuit de traitement après déclenchement pendant une durée prédéterminée.

Selon un mode de réalisation, le circuit de temporisation comporte un condensateur de grande capacité qui conserve sa charge pendant une durée au moins égale à la durée prédéterminée alors que le circuit électronique ne reçoit plus d'alimentation électrique.

Selon un autre mode de réalisation, une batterie sert à alimenter le circuit de temporisation. Une déconnexion de la batterie provoque le blocage du circuit de traitement. La batterie peut être intégrée à un corps de carte.

L'invention sera mieux comprise, et d'autres particularités et avantages apparaîtront à la lecture de la description qui va suivre, la description faisant référence aux dessins annexés, parmi lesquels :
la figure 1 représente schématiquement le circuit électronique constituant un circuit intégré de carte à puce selon l'invention,
la figure 2 représente un premier exemple de circuit de temporisation selon l'invention,
la figure 3 représente un deuxième exemple de circuit de temporisation selon l'invention.

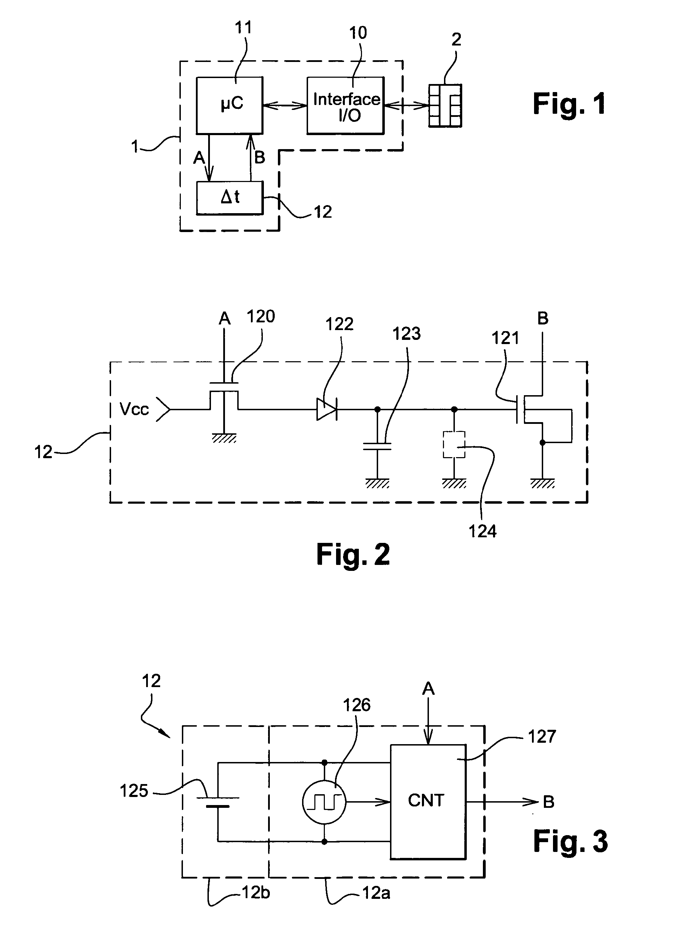

Bien que la présente invention ne soit pas limitée aux seules cartes à puces, la figure 1 représente schématiquement le circuit électronique 1 d'une carte à puce. Ce circuit 1 comporte principalement une interface d'entrée/sortie 10, un micro contrôleur 11 et un circuit de temporisation 12.

L'interface d'entrée/sortie 10 est relié d'une part à un connecteur de la carte à puce 2, et d'autre part au microcontrôleur 11. L'interface d'entrée/sortie 10 est par exemple une interface conforme au standard 7816 et permet au circuit de communiquer avec l'extérieur de la carte via le connecteur 2 relié à un lecteur adapté.

Le microcontrôleur 11 est un circuit de traitement de données tel que largement connu dans le monde des cartes à puce. Le microcontrôleur 11 comporte par exemple un microprocesseur associé à différents types de mémoires contenant des données et des programmes. Parmi les données, certaines se trouvent dans des zones de mémoire protégées, c'est à dire non directement accessible depuis l'extérieur. Parmi les programmes, certains d'entre eux ont pour but de sécuriser la carte notamment en détectant des attaques éventuelles visant à utiliser ou à lire des données sécurisées. La détection d'attaque se fait par exemple en repérant des opérations erronées, des erreurs de code d'accès, des lectures dans des zones interdites ou tout autre fonctionnement anormal d'un programme. L'homme du métier dispose d'un large éventail de solutions connues pour détecter une attaque.

Le microcontrôleur 11 dispose, selon l'invention, d'une entrée d'inhibition et d'une sortie d'activation de temporisation. L'entrée d'inhibition est reliée à une sortie B du circuit de temporisation 12 et elle reçoit un signal binaire de commande qui permet de bloquer le fonctionnement du microcontrôleur 11. Le blocage du microcontrôleur 11 peut se faire de différentes manières. A titre d'exemple, une première technique consiste à couper au moins partiellement le circuit d'alimentation du microcontrôleur 11 de sorte que son fonctionnement soit interdit si l'entrée d'inhibition fournit un signal correspondant au blocage du microcontrôleur. Une deuxième technique consiste à placer des multiplexeurs qui modifient les chemins de données dans le microcontrôleur 11 afin de le rendre fonctionnel ou non fonctionnel.

Le microcontrôleur 11 dispose d'une sortie de détection d'attaque reliée à une entrée A du circuit de temporisation 12. La sortie de détection d'attaque devient active lorsque le microcontrôleur a détecté une attaque logicielle.

Le circuit de temporisation 12 dispose d'une entrée et d'une sortie. L'état de sortie du circuit de temporisation 12 est indépendant de la tension d'alimentation du microcontrôleur 11. Lorsque la sortie du circuit de temporisation 12 est dans un état autorisant le fonctionnement du microcontrôleur 11, le microcontrôleur 11 peut fonctionner. En cas de détection d'erreur, le microcontrôleur 11 déclenche le circuit de temporisation 12. Dès le déclenchement, le circuit de temporisation 12 change d'état et fournit en sortie un signal bloquant le fonctionnement du microcontrôleur 11. Cet état est maintenu jusqu'à la fin d'une durée prédéterminée et même si l'on coupe l'alimentation de la carte à puce. Pour dissuader d'effectuer une nouvelle attaque, il est préféré d'avoir une durée prédéterminée relativement longue. La durée prédéterminée est par exemple comprise entre plusieurs dizaines de minutes et une journée.

La figure 2 montre un premier exemple de circuit de temporisation 12. Le circuit de temporisation 12 comporte principalement un transistor d'entrée 120, un transistor de sortie 121, une diode 122 et un condensateur 123. Le transistor d'entrée 120 est ici un transistor de type MOS mais pourrait être d'un tout autre type. Le transistor de sortie 121 est un transistor MOS qui peut être remplacé par un comparateur de tension qui présente une très grande impédance d'entrée. La grille du transistor d'entrée 120 correspond à l'entrée A du circuit de temporisation 12. Le drain du transistor 120 reçoit la tension d'alimentation de la puce. La source du transistor 120 est reliée à l'anode de la diode 122. La cathode de la diode 122 est reliée d'une part à la grille du transistor de sortie 121 et, d'autre part à l'une des armatures du condensateur 123. L'autre des armatures du transistor 123 est reliée à la masse. Le drain du transistor 121 correspond à la sortie B du circuit de temporisation 12. La source du transistor 121 est reliée à la masse.

Lorsque le microcontrôleur 11 active le signal arrivant sur l'entrée A du circuit de temporisation, le transistor 120 devient passant et charge le condensateur 123 à travers la diode 122. Le condensateur 123 étant chargé, le transistor 121 devient passant et le signal sur la sortie B est amené au potentiel de masse pour bloquer le microcontrôleur 11. Le condensateur 123 se décharge à travers les courants de fuite de la grille du transistor 121 et du condensateur 123. Si l'on coupe l'alimentation, la diode 122 s'oppose à une décharge à travers le transistor 120. La durée ainsi obtenue peut être assez importante. Si les courants de fuites sont trop faibles, il est possible de rajouter une résistance 124 en parallèle sur le condensateur 123.

Un inconvénient de ce mode de réalisation est qu'il est difficile, dans un circuit intégré, de faire des condensateurs ayant une capacité suffisante pour rester chargés pendant plusieurs heures. Selon une variante, il est possible d'utiliser un condensateur externe au circuit intégré. Le condensateur externe est alors placé sur le module électronique de la carte à puce, à côté du circuit intégré.

Un deuxième mode de réalisation du circuit de temporisation 12 est représenté sur la figure 3. Le circuit de temporisation comporte une partie 12a réalisée sur le circuit intégré et une partie 12b placée dans le corps de carte. La partie 12b comporte une batterie 125 destinée à alimenter uniquement le circuit de temporisation 12. La partie 12a comporte un générateur de signal 126 et un compteur 127. Le générateur 126 produit un signal rectangulaire basse fréquence ayant une très faible consommation. La période du signal fournit par le générateur 126 est par exemple de l'ordre de la seconde. Le compteur 127 dispose d'une entrée de remise à zéro qui correspond à l'entrée A du circuit de temporisation 12, d'une entrée d'horloge reliée au générateur 126, et d'une sortie qui correspond à la sortie B du circuit de temporisation 12. La partie 12a comporte peu d'éléments électroniques et fonctionne à basse fréquence, cela permet d'avoir une très faible consommation et une durée de vie de plusieurs années pour la batterie 125.

Dans cet exemple, la sortie B est active lorsqu'elle se trouve à un niveau bas. Par active, il faut comprendre un niveau logique qui bloque le microcontrôleur 11. En fonctionnement normal de la carte, l'entrée A reçoit un signal inactif et la sortie B fournit un signal inactif à l'état haut. Ce signal est fourni tant que la batterie est connectée au circuit de temporisation 12. Ce choix de niveau actif sur la sortie B permet en outre de bloquer le microcontrôleur lorsque la batterie 125 est déchargée et ne permet plus d'assurer la protection de la puce, et également si l'on essaie de désolidariser la puce de la carte.

Si une attaque est détectée par le microcontrôleur 11, l'entrée A reçoit une impulsion active qui déclenche une remise à zéro du compteur 127. Suite à la remise à zéro du compteur 127, la sortie B passe à un niveau actif. Le compteur 127 effectue ensuite un comptage cadencé par le générateur 126. Le niveau actif est maintenu sur la sortie B tant que le compteur 127 n'est pas arrivé en fin de comptage. La fin de comptage correspond par exemple à un dépassement de valeur maximum de comptage (connu en anglais sous le terme overflow). Tant que la valeur maximum de comptage n'est pas atteinte, le microcontrôleur 11 reste bloqué. L'utilisation d'une batterie indépendante de l'alimentation de la carte permet de continuer le comptage même si l'alimentation de la carte est coupé.

La durée de blocage temporaire de la carte est définie par la période du générateur 126 et par la valeur de comptage maximum du compteur 127. A titre d'exemple, une valeur maximum de comptage égale à 2¹⁶ et une période d'environ 1 seconde pour le générateur 126 permettent d'obtenir une durée de blocage égale à environ 18 heures. Cette durée peut être amenée à un jour voire plusieurs jours.

Selon une variante, il est possible d'utiliser un compteur 127 dont la valeur maximale de comptage est programmable par le microcontrôleur 11. La valeur maximum de comptage est alors mémorisée dans une mémoire non volatile. Lors de chaque détection d'attaque, la valeur de comptage est incrémentée par le microcontrôleur. Avec une telle variante, l'indisponibilité de la carte devient croissante en fonction du nombre d'attaques détectées tout au long de sa durée de vie. Ainsi, un utilisateur sera peu pénalisé par l'indisponibilité de la carte en cas de fausse manipulation. Un pirate réalisant une série d'attaques se verra par contre obligé d'attendre de plus en plus entre deux attaques et sera particulièrement gêné par le blocage temporaire.

## Revendications

1. Circuit électronique (1) comportant :
- au moins une interface de communication (10),
- un circuit de traitement (11) de données sécurisées, ledit circuit de traitement (11) étant relié à l'interface de communication (10) pour échanger des informations avec l'extérieur, ledit circuit de traitement étant apte à garder des données secrètes, et apte à détecter une attaque visant à utiliser ou à extraire des données secrètes,
**caractérisé en ce qu'**il comporte un circuit de temporisation autonome (12), relié au circuit de traitement (11), ledit circuit de temporisation (12) étant déclenché lors de la détection d'une attaque et bloquant le fonctionnement du circuit de traitement (11) après déclenchement pendant une durée prédéterminée.

2. Circuit selon la revendication 1, dans lequel le circuit de temporisation (12) comporte un condensateur de grande capacité (123) qui conserve sa charge pendant une durée au moins égale à la durée prédéterminée alors que le circuit électronique (1) ne reçoit plus d'alimentation électrique.

3. Circuit selon la revendication 1, dans lequel le circuit électronique (1) est couplé à une batterie (125), la batterie (125) servant à alimenter le circuit de temporisation (12), et dans lequel une déconnexion de la batterie (12) provoque le blocage du circuit de traitement (11).

4. Carte à puce incluant au moins un circuit électronique qui comporte :
- au moins une interface de communication (10),
- un circuit de traitement de données sécurisées (11), ledit circuit de traitement étant relié à l'interface de communication pour échanger des informations avec l'extérieur, ledit circuit de traitement étant apte à garder des données secrètes, et apte à détecter une attaque visant à utiliser ou à extraire des données secrètes,
**caractérisé en ce que** la carte comporte un circuit de temporisation autonome (12), relié au circuit de traitement, ledit circuit de temporisation étant déclenché lors de la détection d'une attaque et bloquant le fonctionnement du circuit de traitement après déclenchement pendant une durée prédéterminée.

5. Carte à puce selon la revendication 4, dans laquelle le circuit de temporisation (12) comporte un condensateur (123) de grande capacité qui conserve sa charge pendant une durée au moins égale à la durée prédéterminée alors que le circuit électronique ne reçoit plus d'alimentation électrique.

6. Carte à puce selon la revendication 4, laquelle comporte en outre une batterie (125) servant à alimenter le circuit de temporisation (12), et dans laquelle une déconnexion de la batterie provoque le blocage du circuit de traitement.
